# EUROPEAN PATENT APPLICATION

(11) **EP 1 741 740 A1**
(43) Date of publication of application: **10.01.2007**
(21) Application number: 05736906.8
(22) Date of filing: 26.04.2005
(51) Int. Cl.: C08G 85/00, C08G 75/23, C08J 5/22, H01B 1/06, H01M 4/86, H01M 8/02, H01M 8/10, C08L 101/02

(54) **POLYMER HAVING OXOCARBON GROUP AND USE THEREOF**

(30) Priority: 30.04.2004 JP 2004135498
(71) Applicant: Sumitomo Chemical Company, Limited, Tokyo 104-8260 (JP)
(72) Inventor: YOSHIMURA, Ken, Ibaraki 3050005 (JP)
(74) Representative: Vossius & Partner
(86) International application number: PCT/JP2005/008398
(87) International publication number: WO 2005/105897

(57) **Abstract**

Disclosed is a polymer having an oxocarbon group represented by the general formula (1). This polymer having an oxocarbon group is useful as a polymer electrolyte as the material for proton conductive membranes in solid polymer fuel cells which use a gas fuel such as a hydrogen gas or a liquid fuel such as methanol or dimethyl ether.

## Description

### Technical Field

The present invention relates to novel polymers having an oxocarbon group, and the use thereof.

### Background Arts

Oxocarbons, which are typically represented by squaric acid, are known with high acidity thereof due to a stably resonated structure dissociating hydrogen atom from the oxocarbon group (Oxocarbons, page 45 (Edited by Robert West), Academic Press (1980), (ISBN:0-12-744580-3) (Journal of the American Chemical Society, 95, 8703 (1973)).

It is known that polymers having sulfonic acid group are useful for a polymer electrolyte to be applied to polymer electrolyte membrane fuel cells and the like. Following polymers, for example, are proposed as a polymer electrolyte to be applied to polymer electrolyte membrane fuel cells and the like: polymers-having sulfonic acid group into fluorine-containing polymers, typically being Nafion (a trade name of DuPont Co., Ltd.); polymers having sulfonic acid group into polyetherketones (U.S. Patent 5438082); polymers having sulfonic acid group into polyethersulfones (J. Membrane Science, 83, 211 (1993));
polymers having sulfonic acid group into polyimides (Kokai (Japan unexamined patent publication) No. 2003-277501);
polymers having sulfonic acid group into polyphenylenes (U.S. Patent 5403675); and polymers having sulfonic acid group into polyphosphazenes (Chemical Material, 3, 1120, (1991)).

### Disclosure of the Invention

However, a polymer having an oxocarbon group is not yet known.

The creators of the invention, after producing polymers having an oxocarbon group and studying a lot about them, have found that the polymer having an oxocarbon group is useful for a polymer electrolyte which is an ingredient of proton conductive membrane for polymer electrolyte membrane fuel cells which use gaseous fuels such as hydrogen gas or liquid fuels such as methanol and dimethylether, and also found that the polymer has a proton conductivity as much as that of a polymer having sulfonic acid group, and has, in comparison to the polymer having sulfonic acid group, enhanced chemical stability and water resistance, and ability to maintain a high proton conductivity for longer time (than conventional one); and thus accomplished the present invention.

The invention provides
[1] a polymer having an oxocarbon group represented by the following formula (1) 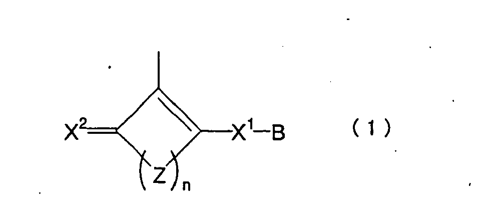 (wherein X¹ and X² independently represent -O-, -S-, or - NR-, and Z represents -CO-, -C(S)-, C(NR')-, alkylene group which may have substitution groups, or arylene group which may have substitution groups, wherein R and R' of NR and NR' independently represent hydrogen atom, alkyl group with carbon number of 1 to 6 which may have substitution group, or aryl group with carbon number of 6 to 1.0 which may have substitution groups; n is a repeating number and represents the number of n=0 to 10, n Z-groups may be same or different from each other; and B represents hydrogen atom or a monovalent metal atom). The invention further provides:
[2] the polymer according to the above-described [1], wherein Z is selected from the group consisting of -CO-, -C(S)-, and -C(NR)-;
[3] the polymer according to the above-described [1] or [2], wherein X₁ and X₂ are -O- s , Z is -CO-, and n is 0 to 2;
[4] the polymer according to any one of the above-described [1] to [3], having an ion-exchange capacity of 0.5 meq/g to 8 meq/g;
[5] the polymer according to any one of the above-described [1] to [4], having a phenyl-phenyl bond in the main chain thereof;
[6] a polymer electrolyte including the polymer as an effective ingredient according to any one of the above-described [1] to [5];
[7] a polymer electrolyte membrane including the polymer electrolyte according to the above-described [6];
[8] a catalytic composition including the polymer electrolyte according to the above-described [6];
[9] a polymer electrolyte membrane-electrode assembly including any one of the polymer electrolyte according to the above-described [6], the polymer electrolyte membrane according to the above-described [7], or the catalytic composition according to the above-described [8]; and
[10] a polymer electrolyte membrane fuel cell including any one of the polymer electrolyte according to the above-described [6], the polymer electrolyte membrane according to the above-described [7], the catalytic composition according to the above-described [8], or the polymer electrolyte membrane-electrode assembly according to the above-described [9].

### Best Mode for Carrying Out the Invention

The invention is explained in more detail as follows.

The polymer of the invention has an oxocarbon group represented by the following formula (1) 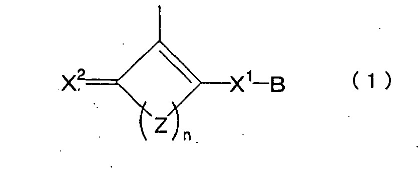 (wherein X¹ and X² independently represent -O-, -S-, or - NR-, and Z represents -CO-, -C(S)-, -C(NR')-, alkylene group which may have substitution groups, or arylene group which may have substitution groups, wherein R and R' of NR and NR' independently represent hydrogen atom, alkyl group with carbon number of 1 to 6 which may have substitution group, or aryl group with carbon number of 6 to 10 which may have substitution groups; n is a repeating number and represents the number of n=0 to 10, n Z-groups may be same or different from each other; and B represents hydrogen atom or a monovalent metal atom).

X¹ and X² independently represent -O-, -S-, or -NR-; preferably -O- or -S-, and particularly preferably -0-. The R of NR represent hydrogen atom, alkyl groups with carbon number of 1 to 6 such as methyl group, trifluoromethyl group, ethyl group, propyl group, isopropyl group, and n-butyl group, or aryl groups with carbon number of 6 to 10 such as phenyl group, pentafluorophenyl group, and naphthyl group. These alkyl group and aryl group may have substitution groups.

The Z represents -CO-, -C(S)-, -C(NR')-, alkylene group which may have substitution groups, or arylene group which may have substitution groups. The R' of NR' has the same meaning mentioned above.

Typical examples of the alkylene groups include alkylene groups with carbon number of 1 to 6 such as methylene, fluoromethylene, difluoromethylene, phenylmethylene, and diphenylmethylene. Typical examples of the arylene groups which may have substitution groups include arylene groups with carbon number of 6 to 10 such as phenylene group, naphtylene group, and tetrafluorophenylene group.

The Z is preferably -CO-, -C(S)-, or -C(NR')-; more preferably -CO-, or -C(S)-; and particularly preferably - CO-.

The n is a repeating number of Z and represents an integer of 0 to 10. When n is two or more, n Z-groups may be same or different from each other. The n is preferably 0 to 4, more preferably 0 to 2, and particularly preferably 1.

The B represents hydrogen atom or a monovalent metal atom. The monovalent metal includes lithium atom, sodium atom, potassium atom, cesium atom, silver atom, and the like. The B preferably includes hydrogen atom, lithium atom, and sodium atom; more preferably hydrogen atom and lithium atom; and particularly preferably hydrogen atom.

Preferable oxocarbon groups are exemplified as follows:

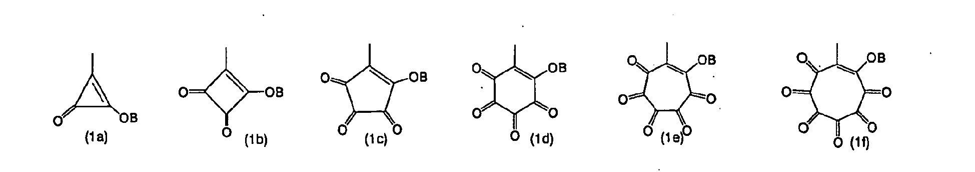

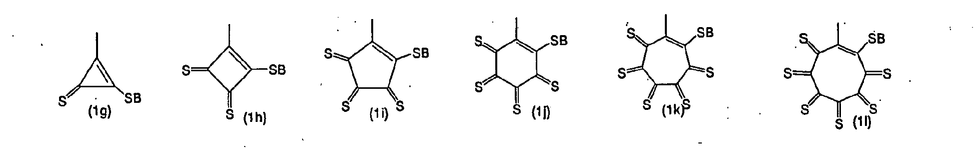

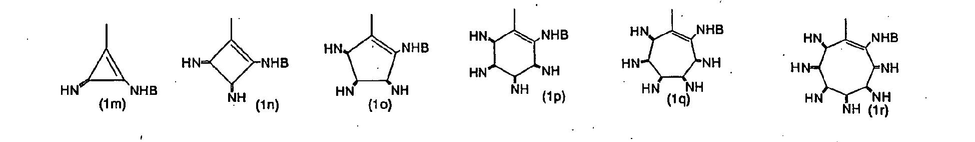

Among above examples, preferable are (1a) to (1d); more preferable being (1a) to (1c), even more preferable being (1b) to (1c), and most preferable being (1b).

The oxocarbon group may be in a form of free acid as B being hydrogen atom or of salt as B being a monovalent metal atom. The polymer having the oxocarbon group of the invention may be composed of repeating units all of which are coupled with an oxocarbon group or some of which are not coupled with an oxocarbon group. The repeating unit may be coupled with two or more of oxocarbon groups. The oxocarbon groups coupled to the repeating units of the polymer may be same or different from each other, or the B in the formula (1) may be hydrogen atom or a monovalent metal atom. When being used as an ingredient of polymer electrolyte membrane fuel cells, in view of power generation ability, all of oxocarbon groups coupled to the repeating units are preferably substantially in a form of free acid.

The monovalent metal atom is preferably lithium atom, sodium atom, or potassium atom; more preferably lithium atom or sodium atom; and particularly preferably lithium atom.

The polymer of the invention is characterized by having an oxocarbon group represented by the formula (1), thus, repeating units composing the polymer are not particularly limited as long as the polymer has the oxocarbon group, the polymer including vinyl polymers, polyoxyalkylenes, polysiloxanes, polyesters, polyimides, polyamides, polybenzoxazoles, polybenzimidazoles, polyaryleneethers, polyarylenes, polyarylenesulfides, polyetherketones, polyethersulfones, and polyphosphazenes, and copolymers thereof, and mixtures thereof.

A vinyl polymer having an oxocarbon group represented by the formula (1) mentioned above, for example, includes polymers having a repeating unit represented below; wherein A represents the formula (1) mentioned above, and m, p, and q represent repeating numbers (hereinafter, representing same meanings), wherein m is usually 20 or more, p is usually 0 to 3, and q is usually 1 to 5. 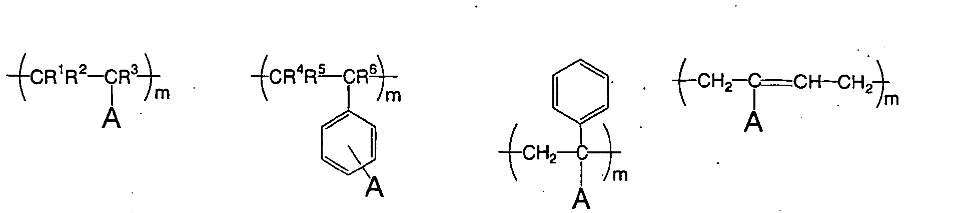 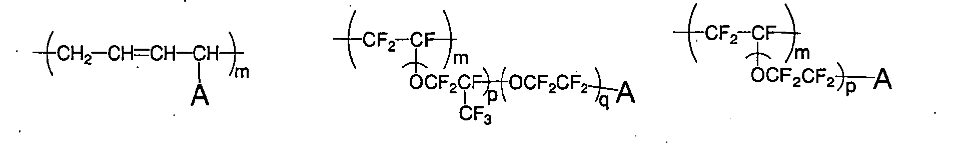 (wherein R¹ to R⁶ independently represent hydrogen atom, fluorine atom, chlorine atom, methyl group, and trifluoromethyl group).

A polyoxyalkylene having an oxocarbon group represented by the formula (1) and a polysiloxane having an oxocarbon group represented by the formula (1) are exemplified by polymers having a repeating unit represented below.

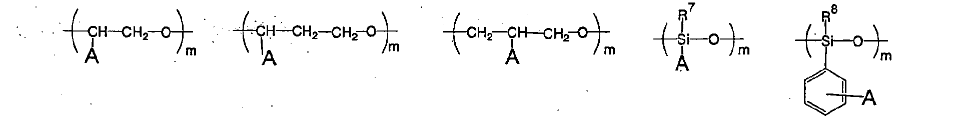

A polyester having an oxocarbon group represented by the formula (1) is exemplified by a polymer having a repeating unit in which an oxocarbon group is coupled with a repeating unit represented below, and the oxocarbon group substitutes any of substitutable hydrogen atoms of the repeating units represented below; the oxocarbon group preferably substitutes a hydrogen atom on an aromatic ring. 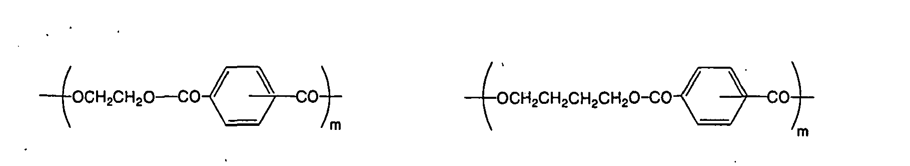 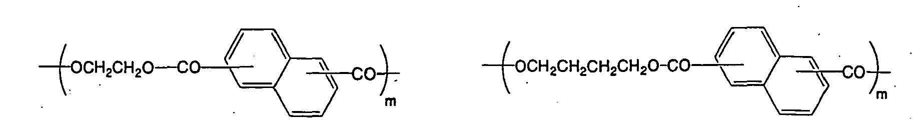 In the above structural formulas, R⁷ and R⁸ independently represent hydrogen atom, fluorine atom, chlorine atom, methyl group, trifluoromethyl group, or phenyl group.

A polyimide having an oxocarbon group represented by the formula (1) is exemplified by a polymer having a repeating unit in which an oxocarbon group is coupled with a repeating unit represented below, and the oxocarbon group substitutes any of substitutable hydrogen atoms of the repeating units represented below.

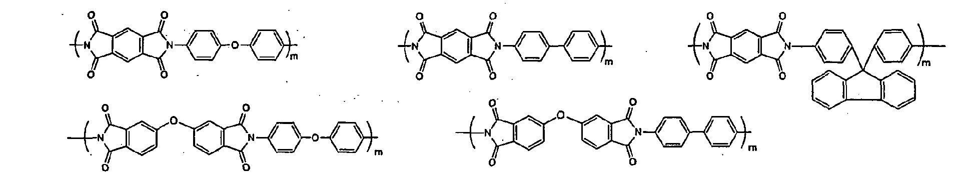

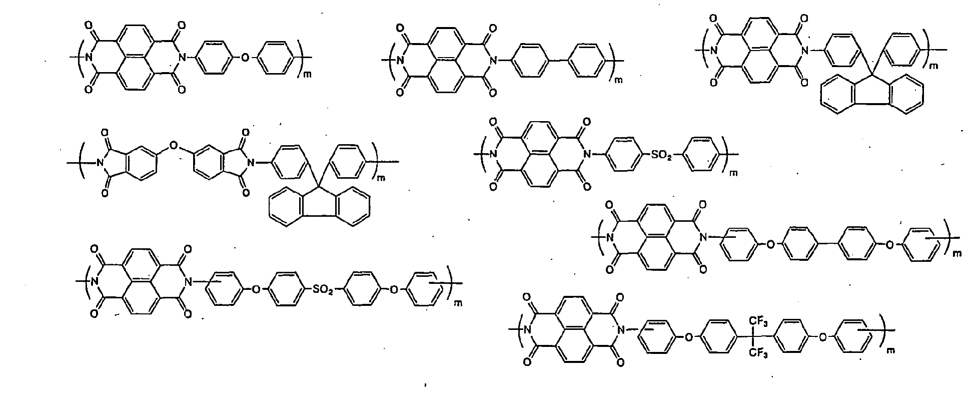

A polyamide having an oxocarbon group represented by the formula (1), a polybenzoxazole having an oxocarbon group represented by the formula (1), a polybenzimidazole having an oxocarbon group represented by the formula (1), and a polyaryleneether having an oxocarbon group represented by the formula (1) are exemplified by polymers having a repeating unit in which an oxocarbon group is coupled with a repeating unit represented below, and the oxocarbon group substitutes any of substitutable hydrogen atoms of the repeating units represented below.

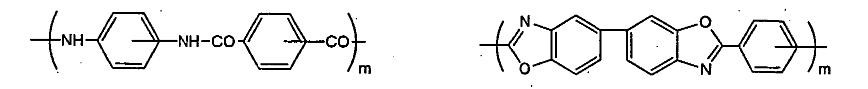

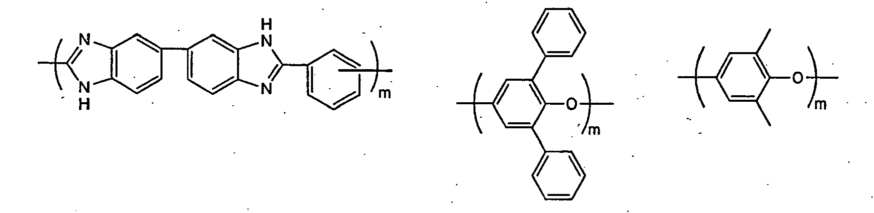

A polyarylene having an oxocarbon group represented by the formula (1) is exemplified by a polymer having a repeating unit in which an oxocarbon group is coupled with a repeating unit represented below, and the oxocarbon group substitutes any of substitutable hydrogen atoms of the repeating units represented below.

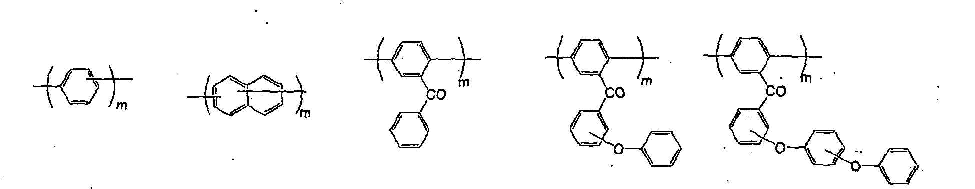

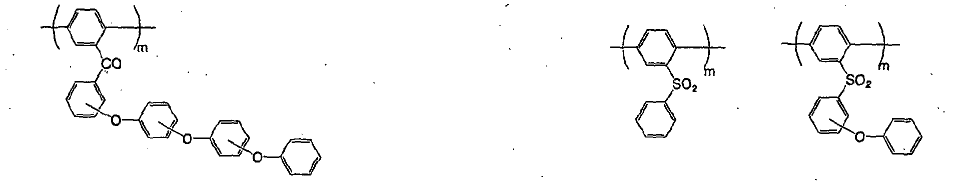

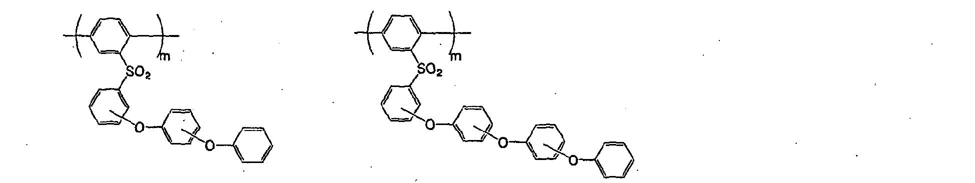

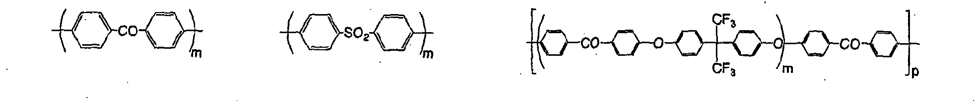

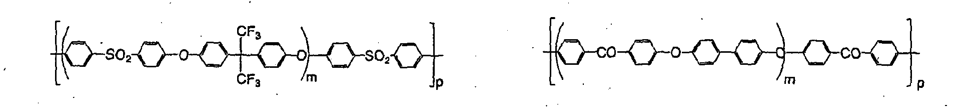

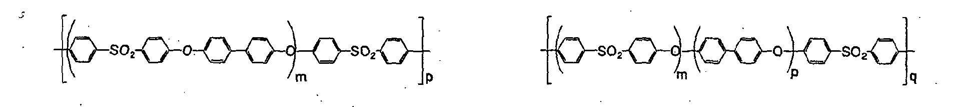

A polyetherketone having an oxocarbon group represented by the formula (1) is exemplified by a polymer having a repeating unit in which an oxocarbon group is coupled with a repeating unit represented below, and the oxocarbon group substitutes any of substitutable hydrogen atoms of the repeating units represented below.

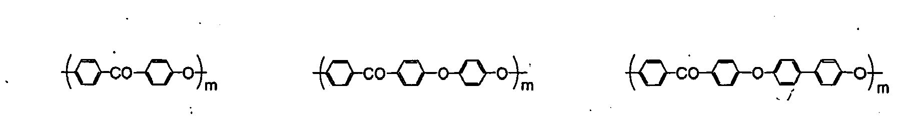

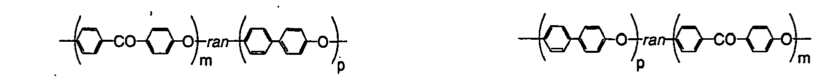

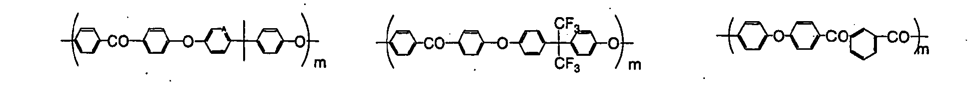

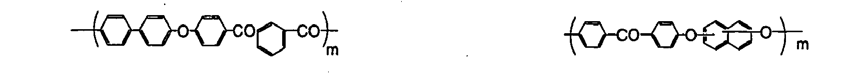

A polyetersulfone having an oxocarbon group represented by the formula (1) is exemplified by a polymer having a repeating unit in which an oxocarbon group is coupled with a repeating unit represented below, and the oxocarbon group substitutes any of substitutable hydrogen atoms of the repeating units represented below.

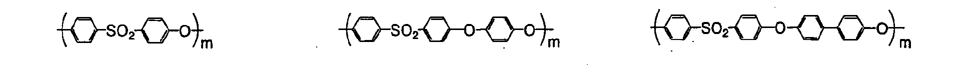

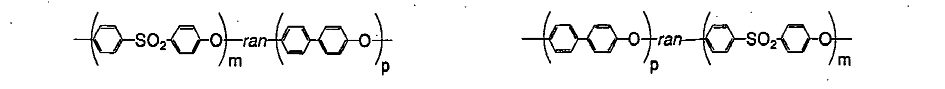

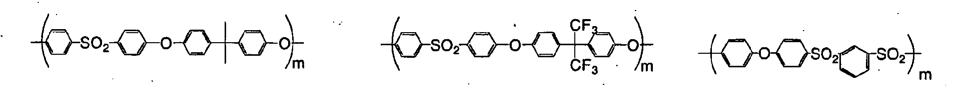

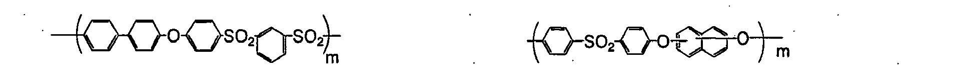

A polyarylene sulfide having an oxocarbon group represented by the formula (1), a polyphthalazinone having an oxocarbon group represented by the formula (1), and a polyphosphazene having an oxocarbon group represented by the formula (1) are exemplified by polymers having a repeating unit in which an oxocarbon group is coupled with a repeating unit represented below, and the oxocarbon group substitutes any of substitutable hydrogen atoms of the repeating units represented below. The A has the same meaning mentioned above. 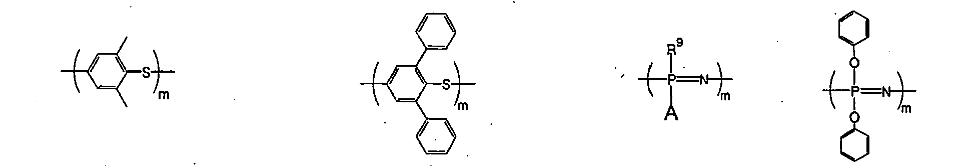 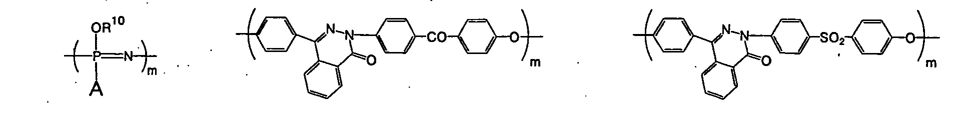 (wherein R⁹ and R¹⁰ independently represent hydrogen atom, fluorine atom, chlorine atom, methyl group, trifluoromethyl group, or phenyl group).

The number of oxocarbon groups coupled to the repeating unit exemplified above may be one or two or more. The oxocarbon groups coupled to the repeating unit may be same or different from each other. The oxocarbon groups may be coupled with not all of the repeating units present in a polymer.

Among polymers mentioned above, preferable are vinyl polymers, polybenzoxazoles, polybenzimidazoles, polyaryleneethers, polyarylenes, polyetherketones, polyethersulfones, and polyphosphazenes, and copolymers thereof, and mixtures thereof. More preferable are polyimides, polyarylenes, polyetherketones, and polyethersulfones, and copolymers or mixtures thereof.

Even more preferable are polyarylenes, polyetherketones, and polyethersulfones, and copolymers or mixtures thereof; and most preferable are polyethersulfones.

In view of water resistance required for polymer electrolytes, the polymer having an oxocarbon group represented by the formula (1) preferably has a phenyl-phenyl bond in the main chain thereof. As examples, included are polyarylenes, polyethersulfones having a phenyl-phenyl bond, polyetherketones having a phenyl-phenyl bond, and polyimides having a phenyl-phenyl bond, and most preferable are polyethersulfones having a phenyl-phenyl bond.

The polymer of the invention, of which structures are exemplified above, does not have any particular limit in the molecular weight thereof, the molecular weight thereof preferably being about 5000 to about 1000000, more preferably being about 10000 to about 500000, and particularly preferably being about 20000 to about 300000. If being less than 5000, it tends to be difficult to retain a form of membrane when the polymer is used as a membrane, and if being 1000000 or more, it tends to be hard to mold in a membrane shape.

The polymer of the invention preferably has an ion-exchange capacity of 0. 5 meq/g to 8 meq/g. If being 0. 5 meq/g or more or less, it tends to decrease an ion conductivity, resulting in disadvantage for power generation, and if being 8 meq/g, it tends to be unfavorable in view of water resistance. The ion-exchange capacity is preferably 0.6 to 7 meq/g, more preferably 0.7 to 6 meq/g, and most preferably 0.8 to 5 meq/g.

A method for producing the polymer of the invention is explained.

The method for producing the polymer of the invention includes:
(A) a method of introducing an oxocarbon group represented by the formula (1) in a polymer;
(B) a method of polymerizing a monomer including an oxocarbon group represented by the formula (1); and the like.

Any of the methods (A) and (B) can be carried out by the following methods:
(I) a method of synthesizing an aliphatic compound or aromatic compound having a group represented by the formula (1) with using a lithium reagent (Journal of Organic Chemistry, 53, 2482, 2477 (1988));
(II) a method of synthesizing an aliphatic compound or aromatic compound having a group represented by the formula (1) with using a Grignard reagent (Heterocycles, 27(5), 1191 (1988));
(III) a method of synthesizing an aliphatic compound or aromatic compound having a group represented by the formula (1) with using a tin reagent (Journal of Organic Chemistry, 55, 5359 (1990), Tetrahydron Letters, 31(30), 4293 (1990)); and
(IV) a method of synthesizing an aromatic compound having a group represented by the formula (1) with a Friedel Crafts reaction (Synthesis, page 46 (1974)). For example, as the method (A), included is a method of binding an group represented by the formula (1) to a polymer not having a group represented by the formula (1) with applying any of the methods of (I) to (IV) mentioned above; or as the method (B), included is a method of synthesizing an aliphatic compound or aromatic compound having a group represented by the formula (1), thereby polymerizing the resulting compound to obtain an objective polymer also with applying any of the methods of (I) to (IV).

Explained as follows is the method (A) that a polymer is introduced with an oxocarbon group represented by the formula (1), specifically that a polymer having a repeating unit of diphenylsulfone is introduced with a group of which structure in the formula (1) is defined with X₁ = X₂ = -O-, Z = -CO -, and n=1.

Included is a method that a polymer having a diphenylsulfone as a repeating unit thereof is reacted with alkyl lithium in a solution under an inert gas atmosphere to generate an anion in the polymer chain thereof, the resulting reactant is reacted with 3,4-dialkoxy-3-cyclobutene-1,2-dion and then treated under an acidic condition.

The polymers having a diphenylsulfone as a repeating unit are exemplified by polymers having the following repeating units, wherein m and p represent the number of repeatings. 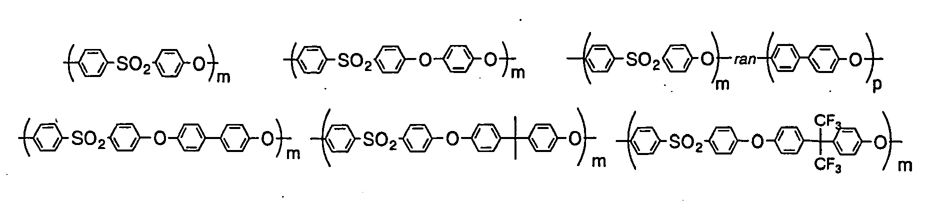 The alkyl lithium includes methyl lithium, ethyl lithium, n-butyl lithium, sec-butyl lithium, tert-butyl lithium, phenyl lithium and the like.

The solvent used for the reaction is not limited as long as being unreactive with alkyl lithium and able to dissolve the polymer. Such solvents include ether solvents such as tetrahydrofuran, 1,3-dioxolane, 1,4-dioxane, 1,3-dioxane, tetrahydropyran, dibutylether, tert-butylmethyl ether, diphenyl ether, and crown ether. Preferable are cyclic ethers such as tetrahydrofuran, 1,3-dioxolane, 1,4-dioxane, 1,3-dioxane, and tetrahydropyran, particularly preferable are tetrahydrofuran and 1,3-dioxolane, and most preferable is tetrahydrofuran. The ether solvent may be used together with aliphatic hydrocarbon solvents and/or aromatic hydrocarbon solvents. The aliphatic hydrocarbon solvents include cyclohexane, hexane, heptane, and the like; the aromatic hydrocarbon solvents include benzene, toluene, xylene, and the like.

The alkyl lithium is reacted with a polymer usually at a temperature of -150 °C to 20 °C, preferably -120 ° C to 0 °C, and more preferably -100 °C to -20 °C. The alkyl lithium is reacted with the polymer of which concentration is usually 0.01 to 50 % by weight, preferably 0.02 to 30 % by weight, more preferably 0.1 to 20 % by weight, particularly preferably 0.2 to 10 % by weight, and most preferably 0.5 to 5 % by weight. The alkyl lithium is reacted with the polymer usually for 1 minute to 10 hours, preferably 2 minutes to 5 hours, more preferably 5 minutes to 4 hours, and particularly preferably 10 minutes to 3 hours.

After generating an anion in the polymer by the manner mentioned above, the polymer is reacted with 3,4-dialkoxy-3-cyclobutene-1,2-dion; the 3,4-dialkoxy-3-cyclobutene-1,2-dion used here, for example, includes 3,4-dimethoxy-3-cyclobutene-1,2-dion, 3,4-diethoxy-3-cyclobutene-1,2-dion, 3,4-di(n-propoxy)-3-cyclobutene-1,2-dion, 3,4-diisopropoxy-3-cyclobutene-1,2-dion, 3,4-di(n-butoxy)-3-cyclobutene-1,2-dion, 3,4-di(sec-butoxy)-3-cyclobutene-1,2-dion, 3,4-di(tert-butoxy)-3-cyclobutene-1,2-dion, 3,4-diphenoxy-3-cyclobutene-1,2-dion, and 3,4-dinaphthoxy-3-cyclobutene-1,2-dion. Among them, preferable are 3,4-dimethoxy-3-cyclobutene-1,2-dion, 3,4-diethoxy-3-cyclobutene-1,2-dion, 3,4-diisopropoxy-3-cyclobutene-1,2-dion, and 3,4-di(n-butoxy)-3-cyclobutene-1,2-dion.

Such 3,4-dialkoxy-3-cyclobutene-1,2-dion is reacted with the polymer usually at a temperature of -150 ° C to 20 ° C, preferably -120 ° C to 0 °C, and more preferably -100 ° C to -20 ° C. A reaction temperature is usually for 1 minute to 10 hours, preferably 2 minutes to 5 hours, more preferably 5 minutes to 4 hours, and particularly preferably 10 minutes to 3 hours. An amount of 3,4-dialkoxy-3-cyclobutene-1,2-dion to be used for the reaction is preferably equal to or more than the moles of the alkyl lithium used.

A reagent used for a treatment under an acidic condition includes hydrochloric acid, sulfuric acid, nitric acid, acetic acid, trifluoroacetic acid, formic acid, and oxalic acid, and mixtures thereof. A treatment temperature is usually -150 °C to 200 °C, preferably -100 °C to 150 ° C, and more preferably -80 °C to 120 °C: A treatment time is usually for 10 minutes to 20 hours, preferably 30 minutes to 15 hours, and particularly preferably 1 hour to 10 hours. The treatment under an acidic condition may be conducted in a homogeneous system or a heterogeneous system. The treated polymer, if being treated in a heterogeneous system, can be collected by filtration; or, if being treated in a homogeneous system, can be collected by filtration after being precipitated in a poor solvent or non-solvent.

A ratio of the oxocarbon group introduced can be controlled by the amounts of alkyl lithium or 3,4-dialkoxy-3-cyclobutene-1,2-dion, or the like.

Explained as follows is a case of using the polymer of the invention for a diaphragm of electro-chemical devices such as fuel cells.

In this case, the polymer of the invention is usually used in a form of film; and ways to convert the polymer to a film are not particularly limited, for example, preferably used is a method of forming a film from a solution of the polymer (a solution casting method).

A film is specifically formed by dissolving a polymer in an appropriate solvent, casting the resultant solution on a glass plate, and then removing the solvent. The solvent used for film formation is not particularly limited as long as being able to dissolve a polymer and then be removed: suitably used solvents include non-protonic polar solvents such as N,N-dimethylformamide (DMF), N,N-dimethyl acetamide (DMAc), N-methyl-2-pyrrolidone (NMP), and dimethylsulfoxide (DMSO); chlorine-containing solvents such as dichloromethane, chloroform, 1,2-dichloroethane, chlorobenzene, and dichlorobenzene; alcoholic solvents such as methanol, ethanol, and propanol; alkyleneglycol monoalkyl ether solvents such as ethyleneglycol monomethyl ether, ethyleneglycol monoethyl ether, propyleneglycol monomethyl ether, and propyleneglycol monoethyl ether; and ether solvents such as tetrahydrofuran, 1,3-dioxolane, 1,4-dioxane, 1,3-dioxane, tetra hydropyran, dibutylether, tert-butylmethylether, diphenyl ether, and crown ether. They may be used alone or as a mixture of two or more kinds thereof depending on requirements.

Among them, dimethylsulfoxide, N,N-dimethylformamide, N,N-dimethyl acetamide, N-methylpyrrolidone, tetrahydrofuran, and 1,3-dioxolane are preferable due to their high ability of dissolving a polymer.

A film thickness is not particularly limited, preferably being 10 to 300 µm, and particularly preferably 20 to 100 µm. When the film is thinner than 10µm, it often does not satisfy a strength for practical usage; and when being thicker than 300µm, the film resistance is so large that characteristics of electro-chemical devices tend to be decreased. The film thickness can be controlled by a solution concentration or a thickness cast on a substrate.

For the purpose of improving various properties of the film, plasticizers, stabilizers, mold release agents, and the like which are used for conventional polymers may be added to the polymer of the invention. The polymer of the invention may be alloyed with other polymer by casting a mixture dissolving together with the other polymer in the same solvent, or other ways.

It is known for the fuel cell usage that inorganic or organic fine particles are added as a water retention agent to control water content. Any of such known methods may be applied as long as not violating the object of the invention.

The film may be cross linked by irradiation of electron beams or radioactive rays in order to enhance mechanical properties thereof. Furthermore, rendering a film complex by impregnating with a porous film or sheet, or mixing it with a fiber or pulp are also known as ways of reinforcing the film; any of these known methods may be applied as long as not violating the object of the invention.

A fuel cell of the invention is explained as follows.

The fuel cell of the invention can be produced by assembling a catalyst and an electro-conductive material as a collector on the opposite faces of a polymer film.

The catalyst is not particularly limited as long as being capable of activating oxidation-reduction reaction of hydrogen atom or oxygen atom, known catalysts can be used, and preferable is a fine particle of platinum. The fine particle of platinum is often used by being carried on a particle or fibrous carbon such as activated carbon or graphite, which is preferably used.

The electro-conductive material as a collector may use known materials, and porous carbon woven fabrics, carbon nonwoven fabrics or carbon papers are preferable to effectively transport raw gases to the catalyst.

Assembling a platinum fine particle or a carbon carrying a platinum fine particle with a porous carbon nonwoven fabric or a carbon paper, or further assembling such assembled with a polymer electrolyte film can be performed with known methods such as disclosed in J. Electrochem. Soc.: Electrochemical Science and Technology, 1988, 135(9), 2209.

The polymer of the invention can be also used as a proton conductive material which is one of ingredients of a catalytic composition which composes a catalyst layer of polymer electrolyte membrane fuel cells. Thus produced fuel cell of the invention can be used with various fuel formations such as hydrogen gas, reformed hydrogen gases, methanol, and dimethylether.

While the embodiments of the invention have been described, it is understood that the above disclosed embodiments of the invention are for purposes of illustration' and not limitation of the scope of the invention. The scope of the invention is designated with the scope of Claims, and further encompasses all changes which will become possible within meanings and scopes equivalent to the description of the scope of Claims.

### (Examples)

The invention is explained in more detail by referring Examples, but should not be construed to be limited thereto.

A molecular weight was determined by a gel permeation chromatography (GPC) under the following conditions to obtain a number-average molecular weight (Mn) and/or a weight-average molecular weight (Mw) in terms of standard polystyrene.

GPC measurement apparatus manufactured by TOSOH Co., Ltd. HLC-8220,
Column manufactured by Shodex Co., Ltd. connecting two columns of KD-80M in series,
Column temperature 40 °C,
Solvent for mobile phase DMAc (with addition of LiBr in a concentration of 10 mmol/dm³), and
Solvent flow-rate 0.5 mL/min.

A proton conductivity was determined with an alternate current method at 80 °C under a humidity of 100 %.

A water absorption rate was defined by a ratio of an incremental film weight after a dried film was immersed in de-ionized water at 100 °C for 2 hours to the weight of the original dried film.

### (Referential Example 1) Production of 3-phenyl-4-hydroxycyclobutene-1,2-dion

Under an argon atmosphere, 2 g (10.1 mmol) of diisopropylsquaric acid and 20 ml of dehydrated THF were charged into a flask to form a homogenous solution. While keeping a temperature of the solution at -78 ° C, the solution was dropped with 4.56 ml (10.3 mmol) of dibutylether solution (19 % by weight) of phenyl lithium for 15 minutes and then subjected to reaction for 3 hours as itself (TLC analysis (silica gel); Rf=0.37 with hexane : ether = 5 : 5 (vol/vol)). After finishing the reaction, the reaction was terminated with 10 ml of water and then the resulting reactant was added with 10 ml of ether. After separating the oil phase, the water phase was further extracted twice with methylene chloride. The extracts from the water phase was added with previously separated oil phase, and then dehydrated with anhydrous sodium sulfate, filtrated and concentrated to obtain a yellow solid. This solid was dissolved with 0.2 ml of THF to obtain a homogeneous solution. This solution was added with 1 ml of 36 % by weight hydrochloric acid at a room temperature to instantly form a yellow precipitate; thereafter subjected to reaction as itself at a room temperature for 4 hours, followed by addition of 50 ml of water. The resulting reactant was washed three times with methylene chloride, followed by distilling off water to obtain a yellow solid. The solid was purified with a silica gel column (TLC analysis (silica gel); Rf=0.00 with hexane : ether = 5 : 5 (vol/vol), with Rf=0.09 with THF) to obtain objective 3-phenyl-4-hydroxycyclobutene-1,2-dion. The structure thereof was confirmed with a ¹H NMR and ¹³C NMR.

### (Referential Example 2) Cyclic voltammetry measurement of 3-phenyl-4-hydroxycyclobutene-1,2-dion

In 50 ml of de-ionized water, 83 mg of 3-phenyl-4-hydroxycyclobutene-1,2-dion synthesized in Referential Example 1 was dissolved to form about 10 mM aqueous solution. This solution was subjected to a cyclic voltammetry measurement under following conditions:
Working Electrode: glassy carbon,
Reference Electrode: Ag/AgCl/saturated KCl,
Counter Electrode: platinum, and
Sweeping range: -0.128 to 1.202 V (vs. Ag/AgCl/saturated KCl).
Thus, it was observed that
3-phenyl-4-hydroxycyclobutene-1,2-dion started its oxidation wave at around 1. 3 V (vs. NHE) in terms of a standard hydrogen electrode. This proves that this compound is able to be stably present in a fuel cell which uses fuels such as hydrogen or methanol.

### (Referential Example 3) Evaluation of anti-radical ability of 3-phenyl-4-hydroxycyclobutene-1,2-dion by Fenton Test

In 500 ml of de-ionized water, 71.2 mg of FeCl₂ · 4H₂O was dissolved. 4 ml of this solution was mixed with 36 ml of 3 % by weight aqueous hydrogen peroxide (Fenton regent). Just after mixing, 10 mg of 3-phenyl-4-hydroxycyclobutene-1,2-dion synthesized in Referential Example 1 was added to be dissolved homogeneously, followed by agitation at 60 °C for 2 hours. A platinum was put into the reacted test solution to eliminate excess amount of hydrogen peroxide. It was confirmed by a LC analysis (water/ acetonitrile) that 3-phenyl-4-hydroxycyclobutene-1,2-dion was hardly decomposed.

### (Referential Example 4) Evaluation of anti-radical ability of benzenesulfonic acid by Fenton Test

The Test was carried out in the same manner as in Referential Example 3 except for using benzenesulfonic acid in place of 3-phenyl-4-hydroxycyclobutene-1,2-dion. It was confirmed by the LC analysis that benzenesulfonic acid almost disappeared.

### Example 1

In a flask of which atmosphere was substituted with an inert gas, 1.00 g (2.26 mmol in terms of repeating unit) of the following polysulfone (manufactured by Aldrich K.K.) 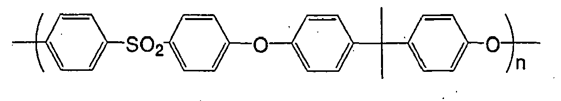 and 80 ml of dehydrated and deoxygenated tetrahydrofuran (hereinafter, referred to as THF) were charged to obtain a mixture. This mixture was maintained at a temperature of -78 °C and added with 3.00 ml (4.80 mmol) of n-BuLi (1.6 M hexane solution) to react for 1 hour (this reactant solution was referred to as a solution A).

In another flask of which atmosphere was substituted with an inert gas, 2.00 g (10.1 mmol) of 3,4-diisopropoxy-3-cyclobutene-1,2-dion and 20 ml of dehydrated and deoxygenated THF were charged to obtain a mixture. This mixture was maintained at a temperature of 78 °C (this mixture was referred to as a solution B).

Both the solution A and solution B were mixed under being maintained at -60°C or less, followed by reaction at -78. °C for 2 hours. After the reaction finished, the reaction was terminated by addition of 1.0 ml of 12 normal hydrochloric acid and then the reactant was gradually heated up to a room temperature, followed by distilling off THF; thereafter, removing hydrochloric acid by decantation, washing, and then drying to obtain a yellow polymer. This polymer was dissolved in 50 ml of THF, and then poured into 300 ml of diethylether to precipitate a purified polymer. The purified polymer was dispersed in 50 ml of 12 normal hydrochloric acid in a flask, followed by reaction at 100 ° C for 5 hours. After the reaction completed, the polymer was filtrated, washed, and dried to obtain an objective polymer (C). A molecular weight of the polymer obtained was Mn=105000. After preparing a solution of the polymer obtained with using THF, the solution was cast to obtain a membrane (D) with 50 µm thickness. A proton conductivity, ion-exchange capacity, and water absorption rate of (D) are shown in Table 1.

It was confirmed that the polymer (C) obtained had a structure represented below according to the results of the ¹H NMR and ¹³C NMR measurements, and the ion-exchange capacity measurement.

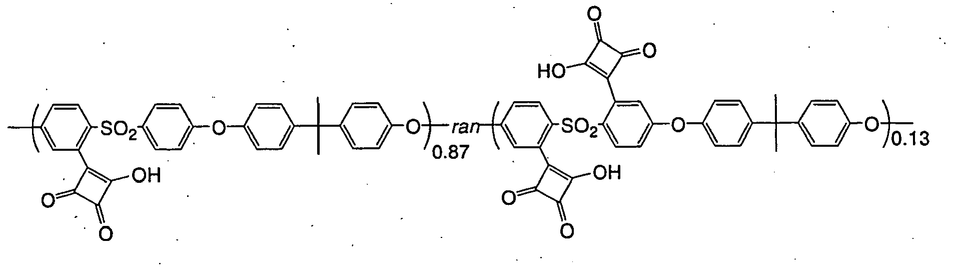

### Example 2

In a flask of which atmosphere was substituted with an inert gas, 3.00 g (7.5 mmol in terms of repeating unit) of the following polyphenylsulfone (manufactured by Aldrich K.K.) 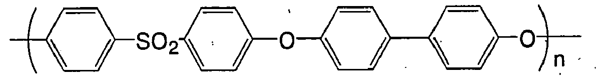 and 300 ml of dehydrated and deoxygenated 1,3-dioxolane were charged to obtain a mixture. This mixture was maintained at a temperature of -78 ° C and added with 11.3 ml (18 mmol) of n-BuLi (1.6 M hexane solution) to react for 2 hours (this reactant solution was referred to as a solution E).

In another flask of which atmosphere was substituted with an inert gas, 2.00 g (10.1 mmol) of 3,4-diisopropoxy-3-cyclobutene-1,2-dion and 100 ml of dehydrated and deoxygenated 1,3-dioxolane were charged to obtain a mixture. This mixture was maintained at a temperature of -78 °C (this mixture was referred to as a solution F).

Both the solution E and solution F were mixed under being maintained at -60 °C or less, followed by reaction at -78 °C for 2 hours. After the reaction finished, the reaction was terminated by addition of 5.0 ml of 12 normal hydrochloric acid and then the reactant was gradually heated up to a room temperature, followed by distilling off 1,3-dioxolane and hexane; thereafter, removing hydrochloric acid by decantation, washing, and then drying to obtain a yellow polymer. This polymer was dissolved in 150 ml of N,N-dimethylacetamide, and then poured into 1000 ml of methanol to precipitate a purified polymer. The purified polymer was dispersed in 150 ml of 12 normal hydrochloric acid in a flask, followed by reaction at 100 °C for 5 hours. After the reaction completed, the polymer was filtrated, washed, and dried to obtain an objective polymer (G). A molecular weight of the polymer obtained was Mn=98000. After preparing a solution of the polymer obtained with using DMAc, the solution was cast to obtain a membrane (H) with 23 µm thickness. A proton conductivity, ion-exchange capacity, and water absorption rate of (H) are shown in Table 1.

It was confirmed that the polymer (G) obtained had a structure represented below according to the results of the ¹H NMR and ¹³C NMR measurements, and the ion-exchange capacity measurement.

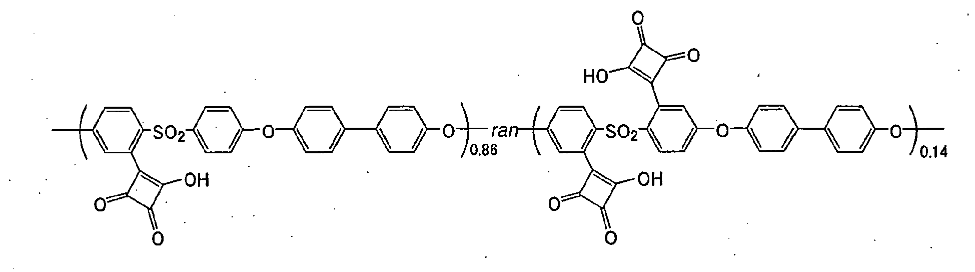

### Example 3

In a flask of which atmosphere was substituted with an inert gas, 0.506 g (2.76 mmol in terms of repeating unit) of poly(4-bromostyrene) (manufactured by Aldrich K.K.) and 30 ml of dehydrated and deoxygenated THF were charged to obtain a mixture. This mixture was maintained at a temperature of -78 ° C and added with 5.33 ml (8.53 mmol) of n-BuLi (1.6 M hexane solution) to react for 30 minutes (this reactant solution was referred to as a solution I).

In another flask of which atmosphere was substituted with an inert gas, 1.69 g (8.53 mmol) of 3,4-diisopropoxy-3-cyclobutene-1,2-dion and 20 ml of dehydrated and deoxygenated THF were charged to obtain a mixture. This mixture was maintained at a temperature of -78 °C (this mixture was referred to as a solution J).

Both the solution I and solution J were mixed under being maintained at -60 °C or less, followed by reaction at -78 °C for 2 hours. After the reaction finished, the reaction was terminated by addition of 5.0 ml of 12 normal hydrochloric acid and then the reactant was gradually heated up to a room temperature, followed by distilling off tetrahydrofuran and hexane; thereafter, removing hydrochloric acid by decantation, washing, and then drying to obtain a yellow polymer. This polymer was sufficiently washed with methanol. The washed polymer was dispersed in 50 ml of 12 normal hydrochloric acid in a flask, followed by reaction at 100 °C for 5 hours. After the reaction completed, the polymer was filtrated, washed, and dried to obtain an objective polymer (K). A molecular weight of the polymer obtained was Mn=141000. After preparing a solution of the polymer obtained with using DMAc, the solution was cast to obtain a membrane (L) with 23 µm thickness. A proton conductivity, ion-exchange capacity, and water absorption rate of (L) are shown in Table 1.

It was confirmed that the polymer (K) obtained had a structure represented below according to the results of the ion-exchange capacity measurement and an elemental analysis.

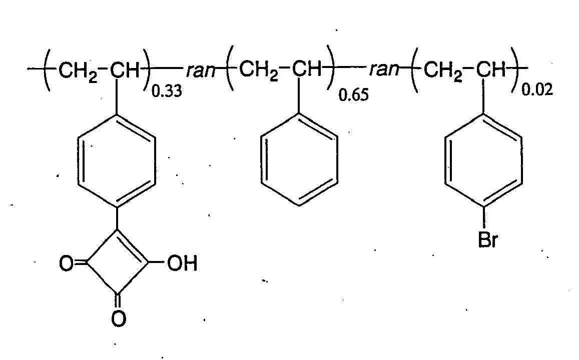

### Example 4

In a flask of which atmosphere was substituted with an inert gas, 26.7 g (105 mmol) of 4,4'-dichlorodiphenylsulfone, 20.0 g (87.7 mmol) of 4,4'-dihydroxydiphenylsulfone, 13.3 g (96.4 mmol) of potassium carbonate, 206 g of N-methylpyrrolidone, and 32 g of toluene were charged, followed by gradually heating up to 150 ° C to distill off toluene. After distilling off toluene, the solution was heated up to 190 °C, followed by reaction at the temperature for 6 hours. Thereafter, this reactant solution was added to 1000 ml of methanol to precipitate a polymer; this polymer was sufficiently washed with water and then methanol, and then dried to obtain a polymer (M). A molecular weight of the polymer obtained was Mn=11000 and Mw=23000.

In a flask of which atmosphere was substituted with an inert gas, 5.00 g of sufficiently dried (M) and 100 ml of dehydrated and deoxygenated THF were charged to form a homogeneous solution. This homogeneous solution was maintained at a temperature of -78 ° C while being dropped with 17.0 ml of n-butyl lithium (1.6 M hexane solution). After finishing the dropping, this mixture was reacted at -78 °C for 60 minutes (this mixture was referred to as a solution N).

In another flask of which atmosphere was substituted with an inert gas; 6.89 g (34.8 mmol) of 3,4-diisopropoxy-3-cyclobutene-1,2-dion and 100 ml of dehydrated and deoxygenated THF were charged to form a homogeneous solution. This solution was maintained at a temperature of -78 °C, followed by being dropped with 2.5 ml (5.65 mmol) of phenyl lithium (2.26 M dibutylether solution) to eliminate a proton source contained in the system of this solution. The system of the solution exhibited yellow orange color. (this solution was referred to as a solution P).

Both the solution N and solution P were mixed under being maintained at -60 °C or less, followed by reaction at -78 °C for 2 hours. After the reaction finished, the reaction was terminated by addition of 5.0 ml of 12 normal hydrochloric acid and then the reactant was gradually heated up to a room temperature, followed by distilling off tetrahydrofuran and hexane; thereafter, removing hydrochloric acid by decantation, washing, and then drying to obtain a yellow polymer. This polymer was sufficiently washed with methanol. The washed polymer was dispersed in 50 ml of 12 normal hydrochloric acid in a flask, followed by reaction at 100 °C for 5 hours. After the reaction completed, the polymer was filtrated, washed, and dried to obtain a polymer (Q). It was confirmed that the polymer (Q) obtained had a structure represented below according to the results of the ¹H NMR and ion-exchange capacity measurements. A molecular weight of the polymer obtained was Mn=17500 and Mw=40000.

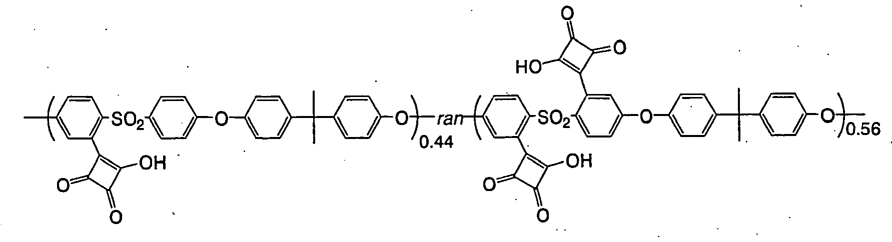

After dispersing 1.50 g of the polymer (Q) obtained above in 100 ml of 2 N aqueous potassium hydroxide for 12 hours, this dispersed solution was filtrated, sufficiently washed, and dried to obtain a polymer (R). A molecular weight of the polymer obtained was Mn=19000 and Mw=40000. It was confirmed that all of the oxocarbon groups were substantially converted to a potassium salt type according to the result of ion-exchange capacity measurement.

In a flask of which atmosphere was substituted with an inert gas, 0.50 g of the polymer (R), 0.50 g of the polymer (M), 14 ml of dimethylsufoxide, 10 ml of toluene, and 125 mg (0.800 mmol) of 2,2'-bipyridyl were charged, and then gradually heated up to 150 °C to distill off toluene. Thereafter, the mixture was cooled down to 60 °C, added with 0.200 g (0.727 mmol) of bis (1,5-cyclooctadiene)nickel (0) to react at 60 °C for 6 hours. After the reaction finished, the reactant was poured into 100 ml of 6 normal hydrochloric acid to precipitate a polymer. This polymer precipitated was re-dissolved in THF and then poured into 6 normal hydrochloric acid for re-precipitation, this re-precipitation procedure was conducted 5 times to purify the polymer, then the polymer was dried to obtain a block polymer (S) composed of a block substantially not containing an oxocarbon group and a block having an oxocarbon group. A molecular weight of the polymer obtained was Mn=41000 and Mw=284000. After preparing a solution of the polymer obtained with using THF, the solution was cast to obtain a membrane (T) with 43 µm thickness. A proton conductivity, ion-exchange capacity, and water absorption rate of (T) are shown in Table 1. It was confirmed that the block polymer (S) obtained had a structure represented below.

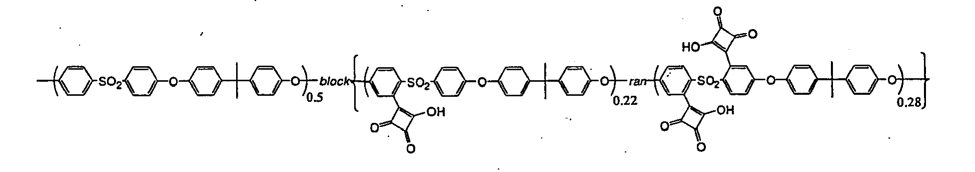

### Comparative Example 1

In a flask, 1.00 g (2.26 mmol in terms of repeating unit) of the polysulfone which was same as in Example 1 and 10 ml of concentrated sulfuric acid (97 % by weight) were charged, and then agitated at a room temperature. When three hours passed after commencement of the agitation, the reaction mass was poured into a huge amount of ice water to precipitate a polymer. The polymer precipitated was washed with water until the washing solution became neutral, and then dried. This polymer was dissolved with DMAc and subjected to film casting to obtain a membrane. The membrane (b) obtained did not have enough strength to measure a proton conductivity. The (b) was easily dissolved with water at 100 °C. The ion-exchange capacity of the (b) is shown in Table 1.

It was confirmed that the polymer obtained had a structure represented below according to the results of the ¹H NMR and ¹³C NMR measurements, and the ion-exchange capacity measurement.

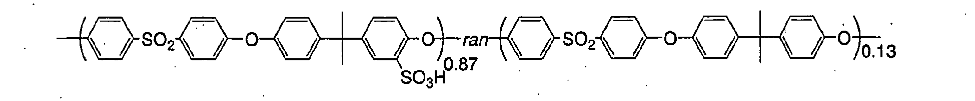

**Table 1**

| | Proton conductivity (S/cm) | Ion-exchange capacity (meq/g) | Water absorption rate (%) |
|---|---|---|---|
| Example 1 | 1.8E-02 | 2.1 | 53 |
| Example 2 | 1.5E-03 | 2.2 | 14 |
| Example 3 | 1.6E-02 | 2.3 | 42 |
| Example 4 | 3.2E-04 | 1.4 | 10 |
| Comparative Example 1 | unmeasurable | 1.7 | dissolved |

### Industrial Applicability

The polymer having an oxocarbon group of the invention is useful for a polymer electrolyte which is an ingredient of proton conductive membrane for polymer electrolyte membrane fuel cells which use gaseous fuels such as hydrogen gas or liquid fuels such as methanol and dimethylether. The polymer of the invention has not only a proton conductivity as much as that of a polymer having sulfonic acid group but also, in comparison to the polymer having sulfonic acid group, an enhanced chemical stability and water resistance, and an ability to maintain a high proton conductivity for longer time.

## Claims

1. A polymer having an oxocarbon group represented by the following formula (1) 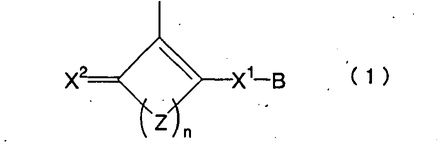 (wherein X¹ and X² independently represent -O-, -S-, or - NR-, and Z represents -CO-, -C(S)-, -C(NR')-, alkylene group which may have substitution groups, or arylene group which may have substitution groups, wherein R and R' of NR and NR' independently represent hydrogen atom, alkyl group with carbon number of 1 to 6 which may have substitution groups, or aryl group with carbon number of 6 to 10 which may have substitution groups; n is a repeating number and represents the number of n=0 to 10, n Z-groups may be same or different from each other; and B represents hydrogen atom or a monovalent metal atom).

2. The polymer according to Claim 1, wherein Z is at least one selected from the group consisting of -CO-, -C(S)-, and -C(NH)-.

3. The polymer according to Claims 1 or 2, wherein X¹ and X² are -O-, Z is -CO-, and n is 0 to 2.

4. The polymer according to any one of Claims 1 to 3, having an ion-exchange capacity of 0.5 meq/g to 8 meq/g.

5. The polymer according to any one of Claims 1 to 4, having a phenyl-phenyl bond in the main chain thereof.

6. A polymer electrolyte comprising the polymer as an effective ingredient according to any one of Claims 1 to 5.

7. A polymer electrolyte membrane comprising the polymer electrolyte according to Claim 6.

8. A catalytic composition comprising the polymer electrolyte according to Claim 6.

9. A polymer electrolyte membrane-electrode assembly comprising any one of the polymer electrolyte according to Claim 6, the polymer electrolyte membrane according to Claim 7, or the catalytic composition according to Claim 8.

10. A polymer electrolyte membrane fuel cell comprising any one of the polymer electrolyte according to Claim 6, the polymer electrolyte membrane according to Claim 7, the catalytic composition according to Claim 8, or the polymer electrolyte membrane-electrode assembly according to Claim 9.
